# EUROPEAN PATENT SPECIFICATION

(11) **EP 4 389 713 B1**
(45) Date of publication and mention of the grant of the patent: **29.04.2026**
(21) Application number: 22858155.9
(22) Date of filing: 16.06.2022
(51) Int. Cl.: C03B 5/167, C03B 5/235, H05B 3/12, H05B 1/02, H05B 3/14, C03B 5/033

(54) **HEATING FURNACE AND METHOD FOR PRODUCING GLASS PRODUCT**
HEIZOFEN UND VERFAHREN ZUR HERSTELLUNG EINES GLASPRODUKTS
FOUR DE CHAUFFAGE ET PROCÉDÉ DE PRODUCTION DE PRODUIT EN VERRE

(30) Priority: 20.08.2021 JP 2021135055
(43) Date of publication of application: 26.06.2024
(73) Proprietor: Nippon Electric Glass Co., Ltd., Otsu-shi, Shiga 520-8639 (JP)
(72) Inventor: MOMO, Daisuke, Otsu-shi, Shiga 520-8639 (JP); TAKAGI, Keiji, Otsu-shi, Shiga 520-8639 (JP)
(74) Representative: Vidon Brevets & Stratégie
(86) International application number: PCT/JP2022/024159
(87) International publication number: WO 2023/021831

(56) References cited:
- WO-A1-2020/106539
- WO-A1-2020/159704
- CN-A- 110 590 126
- CN-U- 210 796 186
- JP-A- 2016 028 007
- JP-A- 2017 083 163
- JP-A- 2018 030 733
- JP-A- S63 153 388

## Description

### Technical Field

The present invention relates to a furnace and a method for manufacturing a glass product.

### Background Art

In a process of manufacturing a glass product, a furnace is used in order to melt a glass material or to maintain a molten state of a glass material. In order to raise or maintain a temperature inside the furnace, heating may be performed using an electric heating element.

As the electric heating element, a heating element such as that disclosed in Patent Literature 1 is used, which has a heat generating part and a terminal part and includes: a substrate containing MoSi₂ in an amount of not less than 70 wt%; and an oxide layer that is formed on a surface of the terminal part and that contains a crystal.

### Citation List

### [Patent Literature]

[Patent Literature 1]
Japanese Patent Application Publication Tokukai No. 2016-115620.

WO 2020/159704 A1 discloses a melting vessel with a controllable atmosphere to maintain an ideal or near-ideal gas-to-oxygen stoichiometric ratio, where glass batch materials are melted by applying electric current to at least one electrode, and the system is supported by a power control unit for regulating voltage, current, or resistivity to ensure thermal stability, along with a batch feeding system capable of delivering raw materials and optional organic reducing agents such as fatty acids.

### Summary of Invention

### Technical Problem

However, in some cases, a heating element that is installed in a furnace and that generates heat in response to conduction of electricity partially changes in quality or becomes partially damaged, so as to need to be replaced. Even with use of a heating element having an oxide layer such as the heating element disclosed in Patent Literature 1, it is difficult to prevent the change in quality or the damage.

It is an object of an aspect of the present invention to extend a life of a heating element.

### Solution to Problem

A furnace in accordance with an aspect of the present invention is defined in claim 1.

According to the above configuration, the atmosphere inside the furnace is adjusted through being supplied and exhausted, so that it is possible to reduce a concentration of a substance, in the atmosphere, which may adversely affect the heating element. This makes it possible to extend a life of the heating element.

In a furnace in accordance with an aspect of the present invention, the heating element is made of a material containing silicon. According to the above configuration, it is possible to extend a life of the heating element made of a material containing silicon.

In a furnace in accordance with an aspect of the present invention, the heating element is made of a material containing molybdenum disilicide or silicon carbide. According to the above configuration, it is possible to extend a life of the heating element made of a material containing molybdenum disilicide or silicon carbide.

In a furnace in accordance with the present invention, the furnace heats a glass material. According to the above configuration, it is possible to reduce a concentration, in the atmosphere inside the furnace, of the substance that is contained in the glass material and that may adversely affect the heating element.

In a furnace in accordance with the present invention, the supply and exhaust system includes: a gas supply device and/or an exhaust device that supply and/or exhaust an atmosphere inside the furnace; a measurement device that measures a fluorine concentration and/or a boron concentration in the atmosphere inside the furnace; and a control device that controls the gas supply device and/or the exhaust device on the basis of a measurement result from the measurement device.

According to the above configuration, it is possible to control the gas supply device and/or the exhaust device on the basis of the measurement result of the fluorine concentration and/or the boron concentration in the furnace, so as to adjust the atmosphere inside the furnace. This makes it possible to reduce the fluorine concentration and/or the boron concentration in the atmosphere inside the furnace and thus extend a life of the heating element.

A glass-product manufacturing method in accordance with an aspect of the present invention is defined in claim 4.

According to this method, the atmosphere inside the furnace is adjusted through being supplied and exhausted. Thus, it is possible to reduce a concentration in the atmosphere of a substance that is contained in the glass material and that may adversely affect the heating element. This makes it possible to extend a life of the heating element.

In a glass-product manufacturing method in accordance with the present invention, the glass raw material contains fluorine or boron. According to the above configuration, it is possible to reduce a fluorine concentration or a boron concentration in the atmosphere inside the furnace. This makes it possible to extend a life of the heating element.

In a glass-product manufacturing method in accordance with the present invention, the heating element is made of a material containing molybdenum disilicide and the step of supplying and exhausting the atmosphere inside the furnace causes a fluorine concentration condition of not more than 70 mg/m³ and/or a boron concentration condition of not more than 200 mg/m³ to be satisfied in the furnace.

The heating element made of a material containing molybdenum disilicide may deteriorate by fluorine or boron. According to the above configuration, it is possible to maintain the fluorine concentration and/or the boron concentration in the atmosphere inside the furnace to not more than the above concentration(s) through the supplying and exhausting for the furnace and thus extend a life of the heating element.

In a glass-product manufacturing method in accordance with an aspect of the present invention, the heating element is made of a material containing silicon. According to the above configuration, it is possible to extend a life of the heating element made of a material containing silicon.

### Advantageous Effects of Invention

According to an embodiment of the present invention, it is possible to extend a life of a heating element.

### Brief Description of Drawings

Fig. 1 is a view schematically illustrating a configuration of a melting furnace in accordance with an embodiment of the present invention.
Fig. 2 is a flowchart illustrating an exemplary process performed by a control device, in accordance with an embodiment of the present invention.
Fig. 3 is a flowchart illustrating an exemplary process performed by a control device, in accordance with an embodiment of the present invention.

### Description of Embodiments

The following description will discuss an aspect of the present invention with reference to the accompanying drawings.

### [Embodiment]

### <Configuration of melting furnace 11 (furnace)>

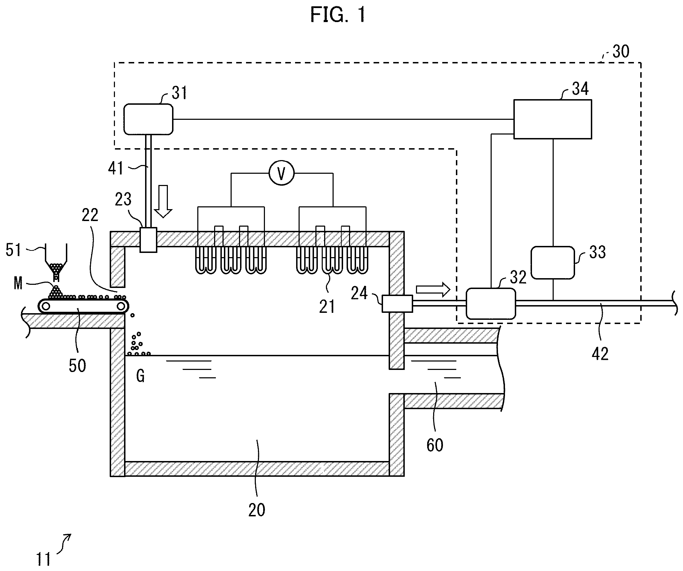

Fig. 1 is a view schematically illustrating a configuration of a melting furnace 11 as an exemplary furnace in accordance with the present embodiment. The melting furnace 11 is a furnace used for heating and melting a glass material. That is, the melting furnace 11 may be used as a furnace for manufacturing a glass product. Examples of the glass product include a plate glass and glass fiber.

As illustrated in Fig. 1, the melting furnace 11 includes a melting tank 20, a heating element 21 that generates heat in response to conduction of electricity, and a supply and exhaust system 30 that adjusts an atmosphere inside the melting tank 20. The melting tank 20 is a tank in which a glass material M is to be heated so as to be molten glass G, and the heating element 21 is provided in the melting tank 20. The supply and exhaust system 30 is a system that adjusts an atmosphere inside the melting tank 20 and includes a gas supply device 31, an exhaust device 32, a measurement device 33, and a control device 34. As necessary, the plurality of heating elements 21 may be provided in the melting tank 20.

That is, the melting furnace 11 is equipment for performing, in the melting tank 20 including the heating element 21 that generates heat in response to conduction of electricity, a glass-product manufacturing method including the steps of heating a glass raw material and supplying and exhausting an atmosphere inside the melting tank 20.

The heating element 21 is, for example, a resistance heating element that causes Joule heat in response to conduction of electricity so as to generate heat. The heating element 21 is suspended from a ceiling of the melting tank 20 and heats an atmosphere inside the melting tank 20. Examples of the type of the heating element 21 include an iron-chromium-aluminum-based heating element, a molybdenum heating element, a tungsten heating element, a platinum heating element, a zirconia heating element, and a lanthanum chromite heating element, as well as a molybdenum disilicide heating element, a nickel-chromium-based heating element, a silicon carbide heating element, and a graphite heating element. The heating element 21 may be made of a material containing silicon. In particular, the heating element 21 may be made of a material containing molybdenum disilicide or silicon carbide.

In order to maintain a temperature inside a furnace to be heated by an electric heating element, the furnace typically does not include a supply and exhaust system. The melting furnace 11 in accordance with an aspect of the present invention includes the supply and exhaust system in the furnace including the heating element. This enables the melting furnace 11 to adjust (reduce) a concentration of a component in an atmosphere inside the furnace which component may adversely affect a life of the furnace. The atmosphere inside the melting tank 20 is adjusted through being supplied and exhausted, so that it is possible to reduce a concentration of a substance, in the atmosphere, which may adversely affect the heating element.

Among the heating elements of various types shown above as examples, the heating element made of a material containing silicon forms, at an operational temperature, a glassy dense protection layer around the heating element and exhibits a high oxidation resistance at a high temperature. However, in some cases, the heating element 21 that heats the atmosphere inside the melting tank 20 partially changes in quality or becomes partially damaged within an operating time shorter than the expected life. The heating element made of a material containing silicon is specifically a heating element made of a material containing molybdenum disilicide or silicon carbide.

As a result of diligent study, the inventors of the present invention have found that there is a possibility that such a case is caused by the fact that fluorine and/or boron which is/are volatilized from the molten glass liquid into the atmosphere adversely affect(s) the protection layer.

In the melting furnace 11 in accordance with the present embodiment, the atmosphere inside the melting tank 20 is adjusted through being supplied and exhausted, so that it is possible to adjust a fluorine concentration and/or a boron concentration in the atmosphere inside the melting furnace 11. This makes it possible to extend a life of the heating element 21 made of a material containing silicon.

The melting tank 20 has an internal space in which the glass material is to be melted. In the internal space, a molten glass is generated. The melting tank 20 has a wall portion made of, for example, a refractory material. An inner wall of the melting tank 20 may be lined with platinum or a platinum alloy in order to prevent corrosion of an interior of the melting tank 20 to be heated to a high temperature. The melting tank 20 is provided with an inlet 22 through which the glass material M is fed. At the inlet 22, a belt conveyor 50 and the like as conveyance means are installed. The glass material M is supplied from a hopper 51 as raw material supply means and is then fed into the melting tank 20 by the belt conveyor 50. The conveyance means may be a screw charger instead of the belt conveyor 50. The glass material M may contain, for example, SiO₂, Al₂O₃, B₂O₃, CaO, MgO, Na₂O, K₂O, and/or F₂, as a component(s). The glass material M can be a recycled glass.

The glass material M that has been fed into the melting tank 20 is typically heated to not lower than 1000°C through radiation heat from the heating element 21 or with a gas burner (not illustrated). This causes the glass material M to undergo a vitrification reaction so as to be the flowable molten glass G. The molten glass G is transferred to a forebay 60 connected to a lateral side of the melting tank 20. The molten glass G that has been transferred to the forebay 60 is then transferred via a feeder (not illustrated) and/or the like, to be subjected to a molding step. Subsequently, the molten glass G is processed to have a predetermined product shape by, for example, a molding device and is then cooled to be glass products.

The gas supply device 31 is a device that supplies a gas to the melting tank 20. The gas may contain a high-temperature air and a combustible gas. The combustible gas can be, for example, city gas or natural gas. The gas supplied from the gas supply device 31 is supplied to the internal space of the melting tank 20 via a gas supply path 41 and a gas supply port 23 which is provided in a top wall or side wall of the melting tank 20. A temperature of the gas supplied from the gas supply device 31 is preferably not lower than 1000°C in order to maintain a temperature inside the melting tank 20.

The exhaust device 32 may be provided in an exhaust path 42 for discharging an atmosphere inside the melting tank 20 to the outside. The exhaust device 32 can be, for example, a known fan. As another embodiment of the exhaust device 32, the atmosphere can be discharged through a stack draft effect. That is, the gas supply device 31 and/or the exhaust device 32 supply and/or exhaust the atmosphere inside the melting tank 20.

The measurement device 33 is a device that measures a fluorine concentration and/or a boron concentration in the atmosphere inside the melting tank 20. The fluorine concentration may be, for example, measured through lanthanum-alizarin complexone absorptiometry (JIS K0105 (2012)) with use of a sample collected from the exhaust path 42. The boron concentration may be, for example, measured through inductively coupled plasma (ICP) atomic emission spectroscopy (JIS K0081 (2012)) with use of a sample collected from the exhaust path 42. Alternatively, the measurement can be continuously performed with use of a fluorine concentration measurement instrument and/or a boron concentration measurement instrument which may be installed in the exhaust path 42.

The control device 34 is a device that controls the gas supply device 31 and the exhaust device 32. The control device 34 controls the gas supply device 31 so as to control an amount of the gas to be supplied into the melting tank 20. In addition, the control device 34 controls the exhaust device 32 so as to control an amount of the gas to be discharged from the interior of the melting tank 20. More specifically, the control device 34 can control the gas supply device 31 and the exhaust device 32 on the basis of the result(s) of measurement of a fluorine concentration and/or a boron concentration performed by the measurement device 33.

Note that although the supply and exhaust system 30 illustrated in Fig. 1 includes the gas supply device 31, the exhaust device 32, the measurement device 33, and the control device 34, the supply and exhaust system 30 may include only at least one of the gas supply device 31 and the exhaust device 32.

The present embodiment discusses an example in which the furnace of the embodiment of the present invention is a glass melting furnace that heats a glass material. However, the furnace in accordance with an embodiment of the present invention is not limited to the glass melting furnace. For example, a furnace that heats and/or melts a material other than glass is also possible.

The heating element 21 may be installed not only in the melting tank 20 but also in the forebay 60, in the feeder, or in another furnace. In such a case, each of these furnaces may include a supply and exhaust system similar to the supply and exhaust system 30 described above.

### <Control Example 1>

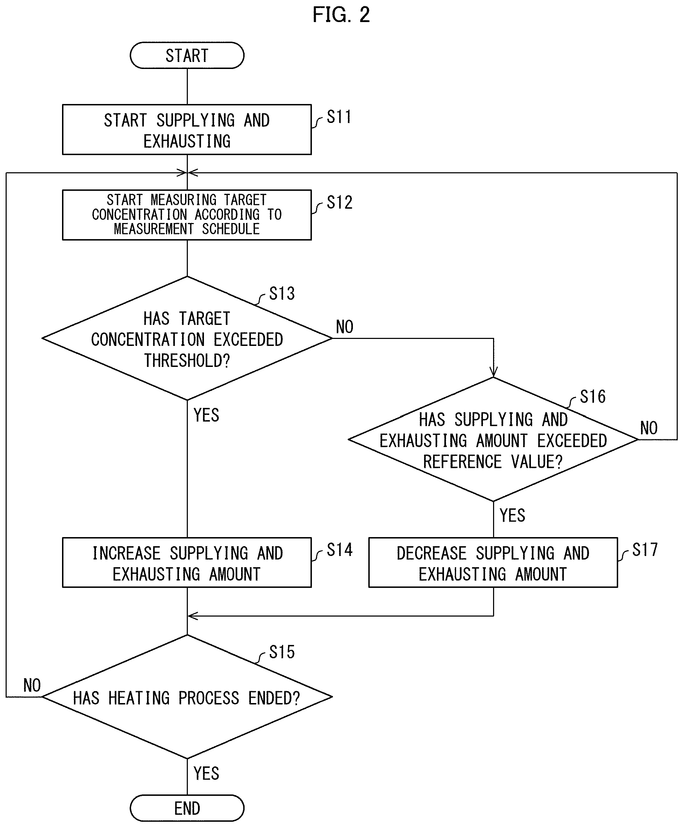

With reference to Fig. 2, the following description will discuss an example of a process (method for adjusting an atmosphere inside the melting tank 20) performed by the control device 34. Fig. 2 is a flowchart illustrating an exemplary process performed by a control device 34. When the conduction of electricity through the heating element 21 is started so as to start the heating of the glass material in the melting furnace 11, a series of processes in the flowchart illustrated in Fig. 2 is performed by the control device 34.

When the heating of the glass material is started in the melting furnace 11, the control device 34 controls the gas supply device 31 and the exhaust device 32 so as to start supplying and exhausting (step S11), as illustrated in Fig. 2. In step S11, the control device 34 may control only the gas supply device 31 so as to start supply of gas. In such a case, the gas may be discharged naturally via the exhaust path 42.

When the supplying and exhausting is started in the step S11, the control device 34 controls the measurement device 33 so as to measure a target concentration(s) according to a measurement schedule (step S12). The measurement target(s) is/are fluorine and/or boron. The measurement target(s) may be set to be only fluorine, fluorine and boron, or only boron, depending on, for example, the components contained in the glass material. In the measurement schedule, the intervals at which the measurement is performed may be set to be any period, for example, 1 second, 10 seconds, 1 minute, 10 minutes, 1 hour, 24 hours, 10 days, or 1 month.

When the measurement device 33 measures the target concentration(s), the control device 34 determines whether or not the target concentration(s) has/have exceeded a threshold(s) (step S13). In step S13, the threshold (upper limit) of the fluorine concentration may be set to, for example, 70 mg/m³. The threshold (upper limit) of the boron concentration may be set to, for example, 200 mg/m³.

In a case where the target concentration(s) has/have exceeded the threshold(s) (S13: YES), the control device 34 controls the gas supply device 31 and the exhaust device 32 so as to increase a supplying and exhausting amount (step S14). This makes it possible to maintain the fluorine concentration and the boron concentration in the atmosphere inside the melting tank 20 at a level not more than the corresponding thresholds described above. Note that, in step S14, the control device 34 may control only the gas supply device 31 so as to increase an amount of the gas to be supplied, so that the supplying and exhausting amount is increased. In such a case, the gas may discharged naturally via the exhaust path 42.

In a case where the heating element 21 is the molybdenum disilicide heating element or the silicon carbide heating element, the fluorine concentration exceeding 70 mg/m³ may cause the fluorine to decrease a viscosity of the protection layer formed around the heating element at an operation temperature. Maintaining the fluorine concentration at a level not more than 70 mg/m³ makes it possible to reduce effect of the fluorine on the protection layer of the heating element. This makes it possible to extend a life of the heating element. Note that, a lower fluorine concentration has less effect on the protection layer of the heating element. Therefore, maintaining the fluorine concentration at a level not more than 50 mg/m³ makes it possible to further extend the life of the heating element.

When the temperature of the heating element 21 is decreased, the boron may aggregate on the surface of the heating element, as a boric acid. The boric acid may cause the surface of the heating element 21 to deteriorate. Maintaining the boron concentration at a level not more than 200 mg/m³ makes it possible to reduce the possibility that the surface of the heating element 21 deteriorates as described above. This makes it possible to extend the life of the heating element 21. Note that a lower boron concentration makes it possible to further prevent the boron from aggregating as the boric acid. Therefore, maintaining the boron concentration at a level not more than 150 mg/m³ makes it possible to further extend the life of the heating element.

Note that, in a case where both the fluorine concentration and the boron concentration are measured, the control device 34 may perform step S14 when either one of the concentrations exceeds the corresponding threshold. In such a case, on the basis of, for example, the concentrations of the components contained in the glass material, the control device 34 may determine, as appropriate, which one of the thresholds the control device 34 is to refer to for performing the control to increase the supplying and exhausting amount. Alternatively, the control device 34 may perform step S14 in a case where both the fluorine concentration and the boron concentration have exceeded the corresponding thresholds.

Subsequently, the control device 34 determines whether or not the heating process for heating the glass material in the melting tank 20 has ended (step S15). In a case where the heating process has ended (S15: YES), the control device 34 completes the process for adjusting the atmosphere inside the melting tank 20. In a case where the heating process has not ended (S15: NO), the control device 34 returns to the process in S12.

Further, in step S13, in a case where the target concentration(s) has/have not exceeded the threshold(s) (S13: NO), the control device 34 determines whether or not the supplying and exhausting amount has exceeded a reference value (S16). The reference value may be set as a standard value necessary for changing the atmosphere inside the melting tank 20.

In a case where the supplying and exhausting amount has exceeded the reference value (S16: YES), the control device 34 controls the gas supply device 31 and the exhaust device 32 so as to decrease the supplying and exhausting amount (step S17). This prevents excessive supplying and exhausting, and thus it is possible to improve an energy-saving effect. Subsequently, the control device 34 proceeds to the process in S15.

In a case where the supplying and exhausting amount has not exceeded the reference value in step S16 (S16: NO), the control device 34 returns to the process in S12.

The control device 34 performs the processes as described in the control example 1, so that it is possible to adjust the atmosphere inside the melting tank 20 such that the fluorine concentration and/or the boron concentration in the melting tank 20 do(es) not exceed the upper limit(s). This makes it possible to extend the life of the heating element 21.

### <Control Example 2>

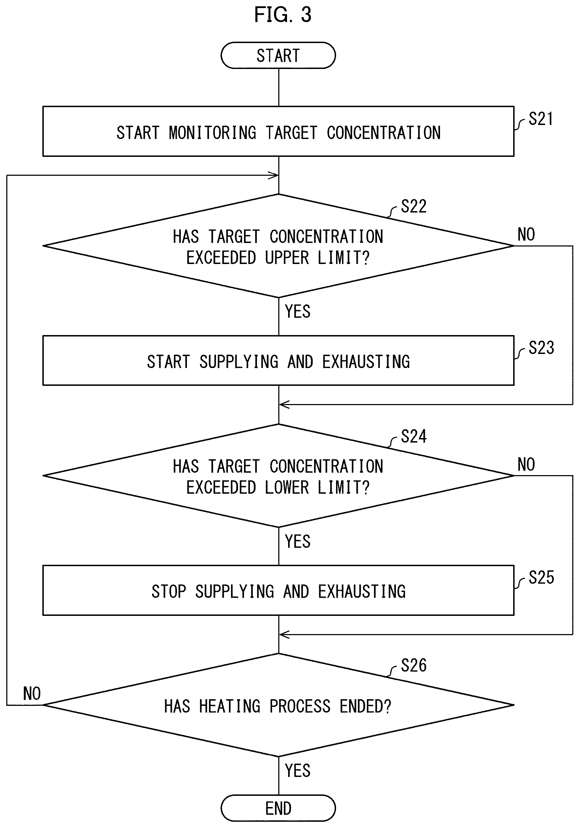

With reference to Fig. 3, the following description will discuss another example of a process (method for adjusting an atmosphere inside the melting tank 20) performed by the control device 34. Fig. 3 is a flowchart illustrating an exemplary process performed by the control device 34. When the conduction of electricity through the heating element 21 is started so as to start the heating of the glass material in the melting furnace 11, a series of processes in the flowchart illustrated in Fig. 3 is performed by the control device 34.

As illustrated in Fig. 3, when the heating of the glass material is started in the melting furnace 11, the control device 34 controls the measurement device 33 so as to start monitoring the fluorine concentration and/or the boron concentration (step S21). Note that this monitoring includes: monitoring to be performed at intervals set as appropriate, for example, every 10 minutes, every 1 hour, every 24 hours, everyday, or every month; or constant monitoring.

The control device 34 determines whether or not the target concentration(s) has/have exceeded the upper limit(s) (step S22). In step S22, the upper limit of the fluorine concentration may be set to, for example, 70 mg/m³. The upper limit of the boron concentration may be set to 200 mg/m³.

In a case where the target concentration(s) has/have exceeded the upper limit(s) in step S22 (S22: YES), the control device 34 controls the gas supply device 31 and the exhaust device 32 so as to start supplying and exhausting (step S23). In a case where both the fluorine concentration and the boron concentration are measured, the control device 34 may perform step S23 when either one of the concentrations exceeds the corresponding threshold. In such a case, on the basis of, for example, the concentrations of the components contained in the glass material, the control device 34 may determine, as appropriate, which one of the thresholds the control device 34 is to refer to for performing the control to increase the supplying and exhausting amount. Alternatively, the control device 34 may perform step S23 in a case where both the fluorine concentration and the boron concentration have exceeded the corresponding thresholds.

Subsequently, the control device 34 determines whether or not the target concentration(s) has/have exceeded the lower limit(s) (is/are less than the lower limit(s)) (step S24). In a case where the target concentration(s) is/are less than the lower limit(s) (S24: YES), the control device 34 controls the gas supply device 31 and the exhaust device 32 so as to stop the supplying and exhausting.

Subsequently, the control device 34 determines whether or not the heating process for the glass material in the melting tank 20 has ended (step S26). In a case where the heating process has ended (S26: YES), the control device 34 completes the adjustment process for the atmosphere inside the melting tank 20. In a case where the heating process has not ended (S26: NO), the control device 34 returns to the process in S22.

In a case where the target concentration(s) has/have not exceeded the upper limit(s) in step S22 (S22: NO), the control device 34 proceeds to the process in step S24.

In a case where the target concentration(s) is/are not less than the lower limit(s) in step S24 (S24: NO), the control device 34 proceeds to the process in step S26.

The control device 34 performs the processes as described in the control example 2, so that it is possible to perform the supplying and exhausting only when the supplying and exhausting is necessary. This improves an energy-saving effect. This makes it possible to contribute to achieving Sustainable Development Goals (SDGs).

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

- 11: Melting furnace (furnace)
- 20: Melting tank
- 21: Heating element
- 30: Supply and exhaust system
- 31: Gas supply device
- 32: Exhaust device
- 33: Measurement device
- 34: Control device

## Claims

1. A furnace (11) for heating a glass material comprising:
a heating element (21) that generates heat in response to conduction of electricity; and
a supply and exhaust system (30) that adjusts an atmosphere inside the furnace,
wherein the supply and exhaust system (30) comprises:
a gas supply device (31) and/or an exhaust device (32) that supply and/or exhaust an atmosphere inside the furnace;
a measurement device (33) that measures a fluorine concentration and/or a boron concentration in the atmosphere inside the furnace; and
a control device (34) that controls the gas supply device (31) and/or the exhaust device (32) on the basis of a measurement result from the measurement device (33).

2. The furnace according to claim 1, wherein the heating element (21) is made of a material containing silicon.

3. The furnace according to claim 2, wherein the heating element (21) is made of a material containing molybdenum disilicide or silicon carbide.

4. A method for manufacturing a glass product, the method comprising the steps of:
heating a glass material in a furnace including a heating element that generates heat in response to conduction of electricity; and
supplying and exhausting an atmosphere inside the furnace, wherein
the glass material contains fluorine or boron,
the heating element is made of a material containing molybdenum disilicide; and
the step of supplying and exhausting the atmosphere inside the furnace causes a fluorine concentration condition of not more than 70 mg/m³ and/or a boron concentration condition of not more than 200 mg/m³ to be satisfied in the furnace.

5. The method according to claim 4, wherein the heating element is made of a material containing silicon.

## Patentansprüche

1. Ofen (11) zum Erhitzen eines Glasmaterials, umfassend:
ein Heizelement (21), das in Reaktion auf die Leitung von Elektrizität Wärme erzeugt;
und
ein Zuführ- und Abführsystem (30), das die Atmosphäre innerhalb des Ofens einstellt,
wobei das Zuführ- und Abführsystem (30) umfasst:
eine Gaszuführvorrichtung (31) und/oder eine Abführvorrichtung (32), die eine Atmosphäre innerhalb des Ofens zuführt und/oder abführt;
eine Messvorrichtung (33), die eine Fluorkonzentration und/oder eine Borkonzentration in der Atmosphäre innerhalb des Ofens misst; und
eine Steuervorrichtung (34), die die Gaszuführvorrichtung (31) und/oder die Abführvorrichtung (32) auf der Grundlage eines Messergebnisses der Messvorrichtung (33) steuert.

2. Ofen nach Anspruch 1, wobei das Heizelement (21) aus einem siliziumhaltigen Material besteht.

3. Ofen nach Anspruch 2, wobei das Heizelement (21) aus einem Material besteht, das Molybdändisilizid oder Siliziumkarbid enthält.

4. Verfahren zur Herstellung eines Glasprodukts, wobei das Verfahren die Schritte umfasst:
Erhitzen eines Glasmaterials in einem Ofen, der ein Heizelement enthält, das als Reaktion auf die Leitung von Elektrizität Wärme erzeugt; und
Zuführen und Abführen einer Atmosphäre innerhalb des Ofens, wobei
das Glasmaterial Fluor oder Bor enthält,
das Heizelement aus einem Material hergestellt ist, das Molybdändisilizid enthält;
und
der Schritt des Zuführens und Abführens der Atmosphäre innerhalb des Ofens bewirkt, dass im Ofen eine Fluorkonzentration von nicht mehr als 70 mg/m³ und/oder eine Borkonzentration von nicht mehr als 200 mg/m³ erreicht wird.

5. Verfahren nach Anspruch 4, wobei das Heizelement aus einem Material hergestellt ist, das Silizium enthält.

## Revendications

1. Four (11) pour chauffer un matériau en verre, comprenant :
un élément chauffant (21) qui génère de la chaleur en réponse à la conduction d'électricité ; et
un système d'alimentation et d'évacuation (30) qui ajuste l'atmosphère à l'intérieur du four,
le système d'alimentation et d'évacuation (30) comprenant :
un dispositif d'alimentation en gaz (31) et/ou un dispositif d'évacuation (32) qui alimente et/ou évacue une atmosphère à l'intérieur du four ;
un dispositif de mesure (33) qui mesure une concentration en fluor et/ou une concentration en bore dans l'atmosphère à l'intérieur du four ; et
un dispositif de contrôle (34) qui contrôle le dispositif d'alimentation en gaz (31) et/ou le dispositif d'évacuation (32) sur la base d'un résultat de mesure provenant du dispositif de mesure (33).

2. Four selon la revendication 1, dans lequel l'élément chauffant (21) est constitué d'un matériau contenant du silicium.

3. Four selon la revendication 2, dans lequel l'élément chauffant (21) est constitué d'un matériau contenant du disiliciure de molybdène ou du carbure de silicium.

4. Procédé de fabrication d'un produit en verre, le procédé comprenant les étapes suivantes :
chauffage d'un matériau en verre dans un four comprenant un élément chauffant qui génère de la chaleur en réponse à la conduction d'électricité ; et
alimentation et évacuation d'une atmosphère à l'intérieur du four,
le matériau en verre contenant du fluor ou du bore,
l'élément chauffant étant constitué d'un matériau contenant du disiliciure de molybdène ; et
l'étape d'alimentation et d'évacuation de l'atmosphère à l'intérieur du four faisant en sorte qu'une condition selon laquelle la concentration en fluor ne dépasse pas 70 mg/m³ et/ou une condition selon laquelle la concentration en bore ne dépasse pas 200 mg/m³ soit satisfaite dans le four.

5. Procédé selon la revendication 4, dans lequel l'élément chauffant est constitué d'un matériau contenant du silicium.
